# FASCICULE DE BREVET EUROPEEN

(11) **EP 1 705 981 B1**
(45) Date de publication et mention de la délivrance du brevet: **23.07.2014**
(21) Numéro de dépôt: 05717430.2
(22) Date de dépôt: 17.01.2005
(51) Int. Cl.: A01B 23/06

(54) **MACHINE DE TRAVAIL DU SOL ET DISPOSITIF DEFLECTEUR APTE A EQUIPER UNE TELLE MACHINE**
BODENBEARBEITUNGSMASCHINE UND VORRICHTUNG, MIT DER SOLCH EINE MASCHINE VERSEHEN WERDEN KANN
SOIL WORKING MACHINE AND DEVICE CAPABLE OF EQUIPPING SUCH A MACHINE

(30) Priorité: 19.01.2004 FR 0400458
(43) Date de publication de la demande: 04.10.2006
(73) Titulaire: UNIA INVESTMENTS Sàrl, 2453 Luxembourg (LU)
(72) Inventeur: Evin Michel, 44850 Ligné (FR)
(74) Mandataire: Godineau, Valérie
(86) Numéro de dépôt international: PCT/FR2005/000098
(87) Numéro de publication internationale: WO 2005/077139

(56) Documents cités:
- EP-A- 1 300 060
- WO-A-02/19792
- US-A- 2 739 517
- US-A- 3 768 572

## Description

La présente invention concerne une machine de travail du sol, en particulier une déchaumeuse de précision, du type comprenant un châssis équipé d'outils aratoires comprenant au moins un, de préférence deux trains successifs de disques non moteurs et au moins un dispositif déflecteur conformé pour casser le flux de terre projeté par les disques de l'un des trains de disques et assurer ainsi un nivellement de la terre au sol.

Une telle machine est notamment décrite dans la demande internationale N° WO 02/19792 du présent demandeur.

Ces machines ont pour caractéristique de travailler à des vitesses particulièrement élevées souvent supérieures à 15 km/h. Il en résulte la nécessité de positionner un dispositif déflecteur entre les deux trains successifs de disques, voire même à l'arrière du second train de disques, en vue d'empêcher soit un endommagement des éléments constitutifs de la machine, soit une gêne dans le travail du sol liée aux projections du flux de terre. Par ailleurs, on évite ainsi de blesser toute personne pouvant se trouver au voisinage de la machine lors du travail de cette dernière.

Jusqu'à présent, les dispositifs déflecteurs appartiennent à deux catégories. La première catégorie est constituée d'un déflecteur plein se présentant sous forme d'un tablier comme l'illustre la demande internationale mentionnée ci-dessus ou le brevet US-A-3.768.572. Ce tablier s'avère particulièrement efficace pour briser les mottes de terre formées et assurer ainsi une fonction de nivellement de la terre au sol. Par contre, lorsque le terrain est humide et la terre particulièrement lourde, on constate que la terre a tendance à coller sur la surface du tablier qu'elle vient heurter, jusqu'à provoquer un colmatage de l'ensemble, de telle sorte qu'après un certain nombre de passages dans le sol, le tablier ne remplit plus son office ou le remplit de manière imparfaite. Par ailleurs, de tels tabliers s'avèrent particulièrement encombrants à stocker. En outre, leur fabrication nécessite de connaître à l'avance la largeur de la machine devant être équipée d'un tel tablier.

On connaît par ailleurs des dispositifs se présentant sous forme de dents ou de doigts positionnés en arrière des trains de disques. Ces doigts ou dents jouent le rôle de tamiseur et ont pour objectif de retenir les gros débris. Toutefois, du fait de leur conception, généralement sous forme d'un corps cylindrique de faible diamètre, ils ne permettent pas de retenir le flux de terre projetée qui tend à passer entre les doigts ou dents. De tels dispositifs sont donc moins efficaces en tant que dispositif brise-mottes et n'assurent pas de fonction de nivellement du sol. Ils ont toutefois pour avantage de ne pas présenter les problèmes de colmatage mentionnés ci-dessus tout en offrant la capacité de stopper les plus gros obstacles.

Un exemple d'un tel dispositif déflecteur est décrit dans le brevet EP-A-1.300.060. On comprend, à travers ce document, que les grosses particules sont retenues par les dents et donc tombent au sol où elles vont être recouvertes par le flux de terre projeté par les disques du train avant de disques lors de l'avancement de la machine. Cette disposition des grosses particules au-dessous d'éléments fins est une disposition anti-agronomique. Cette disposition amène à la formation d'une croûte en surface en cas de pluie. Si des semences ont été déposées à la surface d'un tel sol poreux, on assiste alors à une asphyxie encore appelée effet "battance" desdites semences. Les semences se trouvent dans un environnement de paille et de grosses mottes défavorable à leur développement. Un dessèchement des semences et une absence de germination sont constatés. En conséquence, et pour les raisons mentionnées ci-dessus, l'utilisation de dents ou de doigts est à proscrire. Le titulaire du brevet EP-A-1.300.060 envisage également l'utilisation de plaques appelées "plaques de rebond". Toutefois, ces plaques ne sont ni décrites, ni représentées. On peut imaginer, pour que ces plaques aient un effet similaire aux dents ou doigts, que les plaques soient positionnées perpendiculairement à l'axe d'avancement du châssis, le bord d'attaque de la plaque étant formé par la tranche de ladite plaque.

Un but de la présente invention est donc de proposer une machine de travail du sol et un dispositif déflecteur apte à équiper une telle machine dont les conceptions permettent de casser le flux de terre projetée par les disques de la machine sans provoquer de colmatage ou d'amas de terre à la surface du déflecteur tout en interdisant le passage de la quasi-totalité du flux de terre au-delà du déflecteur.

Un autre but de la présente invention est de proposer une machine de travail du sol et un dispositif déflecteur apte à équiper une telle machine dont les conceptions permettent l'adaptation d'un tel dispositif déflecteur à des machines présentant des largeurs de travail différentes.

A cet effet, l'invention a pour objet une machine de travail du sol, en particulier une déchaumeuse de précision, du type comprenant un châssis équipé d'outils aratoires se présentant sous forme d'au moins un, de préférence deux, train(s) successif(s) de disques non moteurs et au moins un dispositif déflecteur conformé pour casser le flux de terre projeté par les disques de l'un des trains de disques et assurer un nivellement de la terre au sol, caractérisée en ce que le dispositif déflecteur est, dans sa partie travaillante, correspondant à la zone heurtée par un flux de terre, constitué par une pluralité de plaques aptes à vibrer de préférence élastiquement notamment sous l'action du flux de terre, pour faciliter un décollement de la terre desdites plaques, ces plaques étant disposées côte à côte dans le sens de la largeur de la machine et dimensionnées pour couvrir au moins 45 %, de préférence au moins 60 %, de la largeur totale de travail de ladite machine.

Grâce à la conception du dispositif déflecteur sous forme de plaque ou de lame élastique vibratile apte à vibrer, soit sous l'effet du déplacement de la machine, soit sous l'effet du flux de terre projeté à la surface de ladite plaque ou lame, on évite la formation d'un amas de terre à la surface de la plaque venant d'être heurtée par le flux de terre et par suite, la réalisation d'un colmatage observé avec un tablier classique dont les dimensions et la conception sous forme d'un élément d'une seule pièce pleine couvrant la totalité de la largeur de la machine empêchent tout déplacement relatif de ce dernier et par suite, amènent à un colmatage rapide de ce dernier.

La réalisation du dispositif déflecteur sous forme d'une pluralité de plaques permet d'obtenir, à partir du flux de terre heurtant les plaques, un dépôt au sol de particules fines qui sont ensuite recouvertes par les résidus de récolte ou les particules grossières. Cette disposition "particules fines recouvertes d'éléments grossiers" est une disposition agronomique qui favorise le développement des semences en protégeant, à l'aide des éléments grossiers, ces dernières. Un tel effet est contraire à celui obtenu avec des dents. Cet effet ne peut être obtenu que si les plaques couvrent au moins 45 %, de préférence au moins 60 %, de la largeur de travail pour former une surface équivalente à une surface pleine apte à arrêter le flux de terre.

Les moyens de liaison de la plaque ou groupe de plaques à la machine de travail du sol s'étendent entre plaque ou groupe de plaques et disque du train arrière de disques ou organe de liaison du disque du train arrière au châssis rendant ainsi la plaque ou le groupe de plaques solidaire en déplacement de l'ensemble organe de liaison/disque. Cette conception présente un grand nombre d'avantages. En effet, la plaque ou groupe de plaques empiète sur le disque du train arrière ou disque suiveur de telle sorte que l'encombrement en longueur de l'ensemble plaque/disque est réduit. Comme la plaque ou groupe de plaques est solidaire en déplacement du disque, la plaque ou groupe de plaques profite du dispositif de sécurité du disque autorisant un effacement de la plaque ou groupe de plaques lors de la présence d'obstacles au sol. Enfin, grâce à cette disposition, un télescopage des disques du train avant avec le dispositif déflecteur est rendu plus difficile voire impossible.

Selon une forme de réalisation préférée de l'invention, le dispositif déflecteur conformé pour casser le flux de terre projeté par les disques du train dit train avant de disques est couplé de préférence de manière solidaire en déplacement au train dit train arrière de disques.

L'invention sera bien comprise à la lecture de la description suivante d'exemples de réalisation, en référence aux dessins annexés dans lesquels :
la figure 1 représente une vue partielle en perspective d'une machine de travail du sol, telle qu'une déchaumeuse, équipée d'un dispositif déflecteur conforme à l'invention ;
la figure 2 représente une vue en perspective d'éléments en forme de plaque ou de lames, destinés à constituer un dispositif déflecteur ;
la figure 3 représente une vue en perspective d'un autre mode de réalisation d'éléments sous forme de plaques et destinés à constituer un dispositif déflecteur ;
la figure 4 représente une vue de côté de la machine représentée à la figure 1 ;
la figure 5 représente une vue partielle en perspective d'un autre mode de réalisation d'une machine de travail du sol conforme à l'invention avec une vue de détail d'une partie du dispositif déflecteur ;
la figure 6 représente une vue de côté de la machine de travail du sol représentée à la figure 5 ;
la figure 7 représente une vue en perspective d'un déflecteur obtenu par découpe d'un flan et dont les plaques sont prolongées par une base commune et
la figure 8 représente une vue en perspective d'un ensemble disque/organe de liaison/plaque déflectrice.

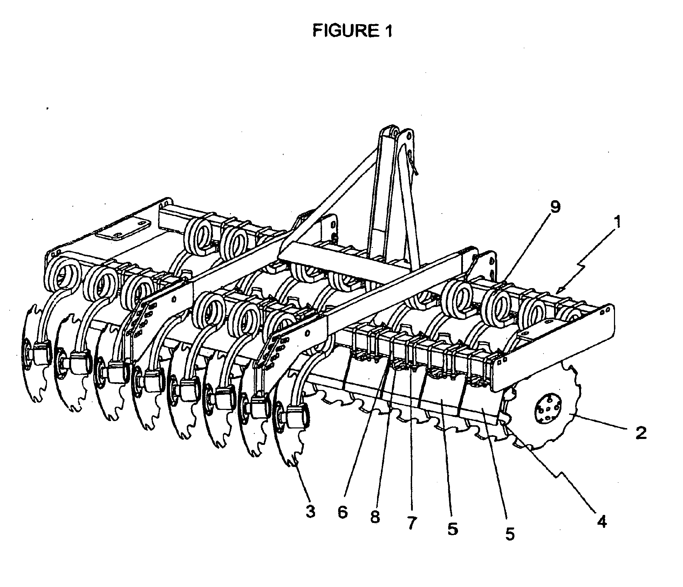

Comme mentionné ci-dessus, l'invention concerne une machine de travail du sol, en particulier une déchaumeuse de précision, du type représenté à la figure 1. Ces machines sont bien connues à ceux versés dans cet art. Elles présentent notamment un châssis 1 tracté, porté ou traîné, équipé au moins d'outils aratoires comprenant au moins un, de préférence deux, trains successifs de disques déchaumeurs appelés respectivement disques 2 avant et disques 3 arrière. Ces disques en effet s'étendent le long d'une largeur de travail de la machine de manière à former un train de disques parallèles l'un par rapport à l'autre. La conception de ces disques et leur positionnement sur le châssis 1 de la machine ne seront pas décrits plus en détail car ils sont bien connus à ceux versés dans cet art.

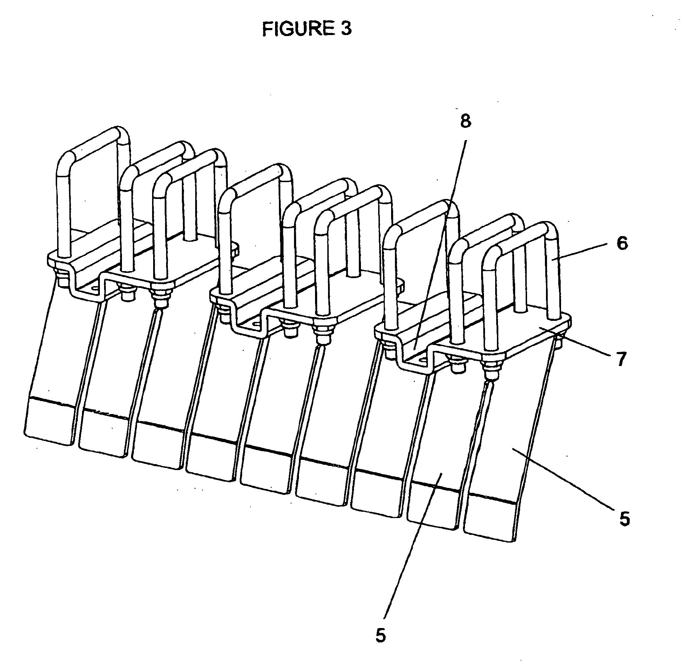

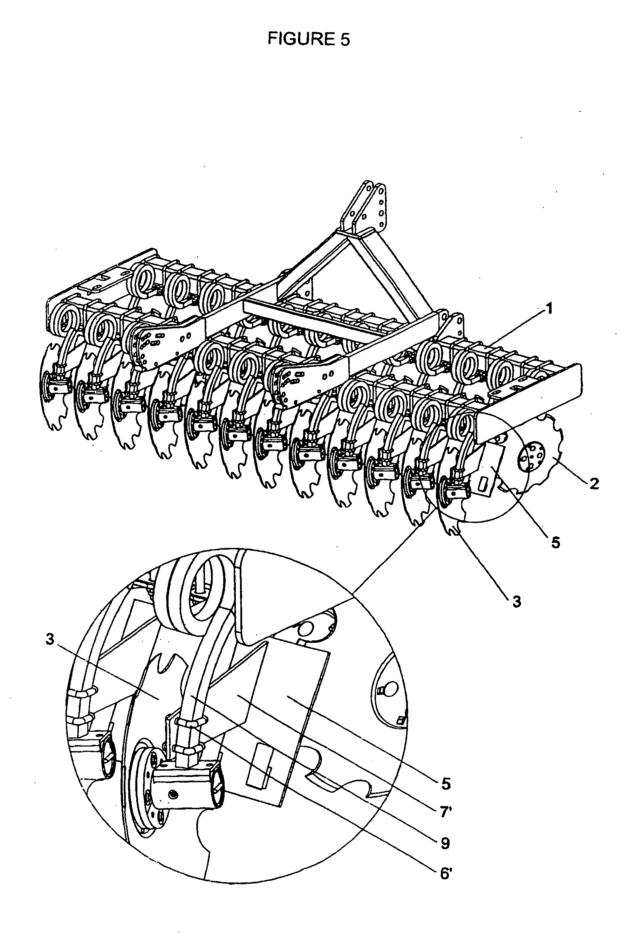

Il peut être prévu également sur ce châssis 1, généralement attelé à un véhicule tracteur, au moins un dispositif de réglage de la profondeur de travail des disques, tel qu'un rouleau. Il est également prévu un dispositif déflecteur, représenté en 4 aux figures, conformé pour casser le flux de terre projeté par les disques de l'un des trains de disques et assurer ainsi un nivellement de la terre au sol. Ce ou ces dispositif(s) déflecteur(s) peuvent être disposés entre les deux trains de disques comme l'illustre la figure 1 ou en arrière de chaque train de disques, un dispositif déflecteur étant dans ce cas destiné à casser le flux de terre projeté par le train de disques avant tandis qu'un autre dispositif déflecteur est destiné à casser le flux de terre projeté par le train de disques arrière. Ce dispositif déflecteur est, dans sa partie travaillante, correspondant à la zone heurtée par un flux de terre constitué par une pluralité d'éléments sous forme de plaques 5 ou de lames, aptes à vibrer pour faciliter un décollement de la terre desdits éléments de plaques. Ces plaques 5 sont ainsi disposées côte à côte dans le sens de la largeur de la machine et dimensionnées pour couvrir au moins 45 % de la largeur de travail de ladite machine. Grâce à ce dimensionnement, l'interception du flux de terre obtenu au moyen de telles plaques est équivalent à celui obtenu au moyen d'un élément continu se présentant sous forme d'un tablier venant couvrir la totalité de la largeur de la machine. Il en résulte une disposition agronomique des particules légères et des particules lourdes, les particules lourdes venant recouvrir les particules légères. Le flux de terre, apte à passer à travers cet élément déflecteur sous réserve que cela puisse se produire, représente une quantité infime du flux de terre projetée. Ainsi, les espaces entre deux lames sont extrêmement faibles. De préférence, ces espaces sont compris dans la plage [1 à 150] mm. La valeur de 150 mm est retenue quand chaque disque fait saillie entre deux plaques de déflecteur comme l'illustre la figure 5 de manière à mieux assurer la compacité de la machine. Les plaques ou lames peuvent quant à elles présenter des dimensions variables. Dans les exemples représentés à la figure 1, ces plaques présentent une largeur comprise dans la plage [5 - 30] cm tandis que dans l'exemple représenté à la figure 3, ces plaques présentent une largeur comprise dans la plage [2 - 15] cm.

Plusieurs modes de réalisation d'un tel dispositif déflecteur peuvent être retenus.

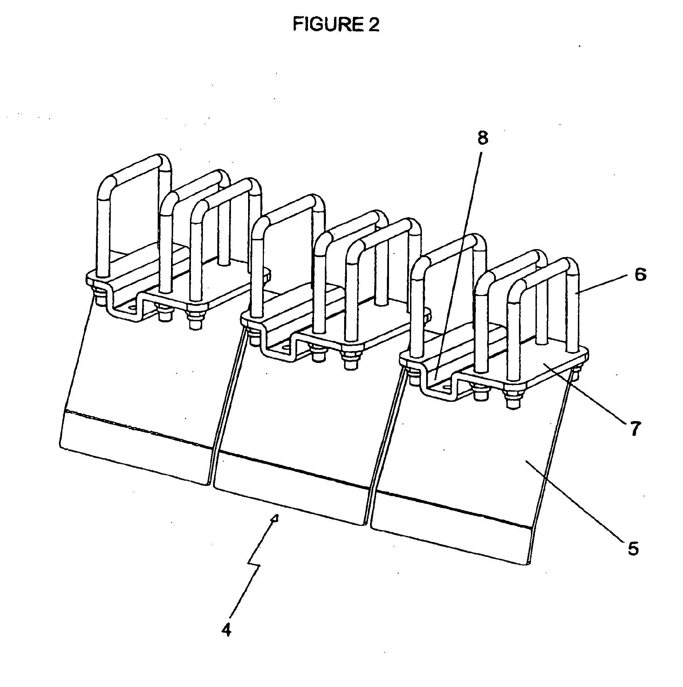

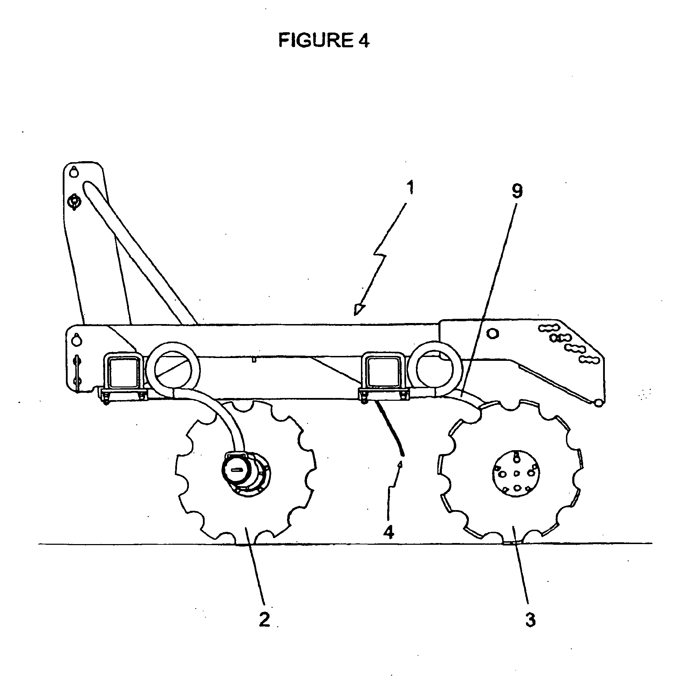

Dans les modes de réalisation représentés aux figures 1 à 6 et 8, chaque plaque, ou groupe de plaques, est munie de ses propres moyens de liaison au reste de la machine pour pouvoir être monté sur la machine de manière indépendante des autres plaques ou groupes de plaques. Dans un premier mode de réalisation conforme à celui représenté aux figures 1 à 4, le nombre de moyens de liaison des plaques au châssis 1 est élevé. Ainsi, dans la figure 1, il y a autant de moyens de liaison que de plaques 5.

Dans l'exemple représenté à la figure 3, à chaque moyen de liaison est associé un groupe de plaques ici constitué par trois plaques. Indépendamment du mode de réalisation retenu aux figures 1 à 4, à chaque fois, au moins une partie des moyens 7 de liaison de la plaque 5 ou du groupe de plaques 5 à la machine s'étendent entre châssis 1 et plaque 5 ou groupe de plaques 5 et constituent en outre les moyens de support d'un organe 9 de liaison du disque, situé en arrière de ladite plaque 5 ou groupe de plaques 5, au châssis 1 de la machine.

Ainsi, dans ces exemples de réalisation, les moyens de fixation de la plaque ou groupe de plaques au châssis sont constitués d'au moins deux étriers 6 aptes à chevaucher une poutre du châssis 1 et d'une platine 7 fermant les étriers 6 à l'état positionné sur le châssis 1. Les plaques sont alors montées solidaires de cette platine 7. La liaison entre plaque et platine 7 peut être réalisée sous diverses formes. Dans les exemples représentés, les plaques sont à chaque fois fixées par boulonnage à la platine 7. Il peut également être envisagé, de manière équivalente, de souder chaque plaque à la platine 7. Cette platine 7 présente encore une gorge 8 à l'intérieur de laquelle est introduite une extrémité d'un organe de liaison du disque au châssis. Cet organe de liaison peut être constitué par un ressort 9 hélicoïdal à au moins une spire, comme l'illustre en particulier la figure 1.

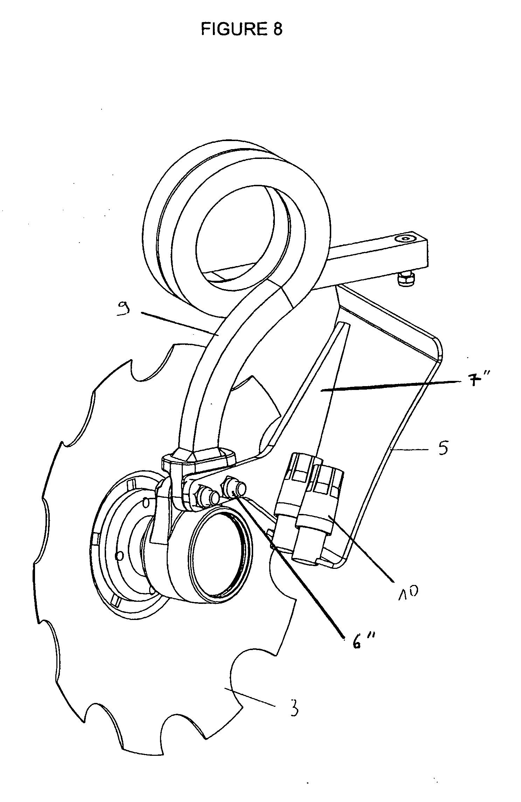

Dans un autre mode de réalisation du dispositif déflecteur, représenté en particulier aux figures 5, 6 et 8, les moyens 6', 7' ou 6", 7" de liaison de la plaque 5 ou groupe de plaques 5 à la machine de travail du sol s'étendent entre plaque 5 ou groupe de plaques 5 et disque 3 ou organe 9 de liaison du disque 3 au châssis 1. De préférence, le dispositif déflecteur 4 conformé pour casser le flux de terre projeté par les disques 2 du train dit train avant de disques est couplé de préférence de manière solidaire en déplacement au train dit train arrière de disques 3. Ainsi, dans ce cas, comme l'illustre la figure 5 ou la figure 8, chaque plaque ou groupe de plaques du déflecteur est relié à l'élément 9 de liaison du disque 3 du train arrière au châssis 1 par une plaque, représentée en 7' ou 7", s'étendant orthogonalement à la première plaque et prenant appui sur le dos de la plaque déflectrice 5. Des étriers, représentés en 6' à la figure 5, sont prévus pour coupler cette plaque 7' de liaison entre la plaque 5 déflectrice et le ressort 9 hélicoïdal au ressort 9 hélicoïdal. Il aurait pu être prévu, de manière équivalente, de fixer cette plaque 7' de liaison de la plaque 5 déflectrice au moyeu du disque 3 du train arrière sans sortir du cadre de l'invention. Dans l'exemple représenté à la figure 8, la plaque 7" de liaison de la plaque 5 déflectrice à l'organe 9 de liaison est fixée à l'organe de liaison par des boulons 6" qui servent en outre à la liaison entre organe 9 de liaison et moyeu du disque 3 du train arrière.

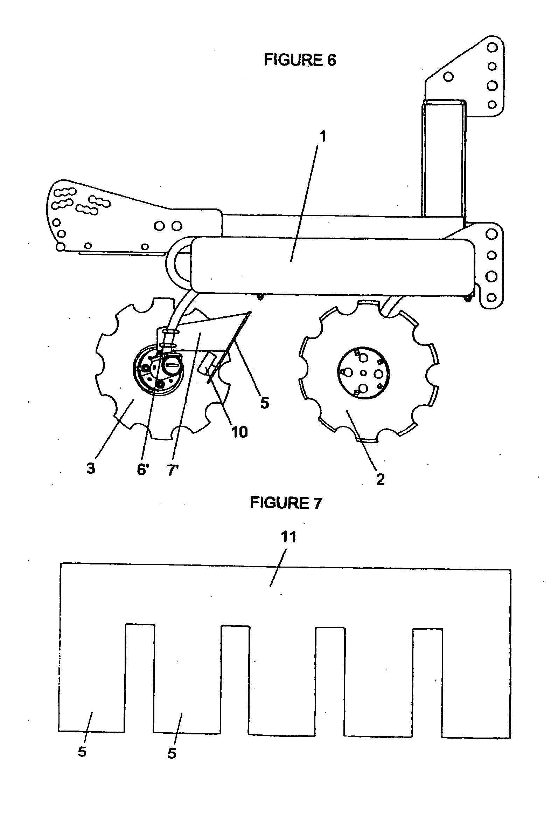

Dans un autre mode de réalisation où il est souhaité réduire le nombre de moyens de liaison des plaques 5 à la machine, chaque plaque 5 peut être reliée en prolongement de sa partie travaillante à une base 11 commune auxdites plaques 5, base 11 et partie travaillante des plaques 5 étant formées d'une seule pièce. La base 11 est elle-même apte à être fixée au reste de la machine par des moyens de liaison appropriés qui peuvent être identiques à ceux décrits ci-dessus. Ce mode de réalisation est plus particulièrement représenté à la figure 7. Ce dispositif déflecteur peut dans ce cas être constitué d'un seul flan de tôle conforme à la figure 7 ou de plusieurs flans de tôle disposés côte à côte et similaires à celui représenté à la figure 7. Dans ce mode de réalisation, les plaques et leurs bases sont obtenues à partir d'un flan de tôle d'allure générale rectangulaire, sectionné sur une partie de sa largeur suivant une pluralité de découpes sensiblement parallèles prenant naissance à partir d'un même bord libre du flan de tôle pour former les éléments sous forme de plaques. Ce flan est éventuellement, antérieurement ou postérieurement à sa découpe, conformé pour lui conférer un profil d'allure générale courbe. Ce mode de réalisation présente l'avantage de simplifier la liaison entre plaques et machine.

Dans les exemples représentés et indépendamment du mode de réalisation retenu, les plaques sont alignées le long d'une ligne sensiblement perpendiculaire à l'axe d'avancement du châssis et correspondant à la largeur de travail de la machine.

Dans un autre mode de réalisation non représenté, les plaques peuvent être positionnées de manière décalée axialement par rapport à l'axe d'avancement du châssis et être par exemple ainsi positionnées de part et d'autre d'une ligne sensiblement perpendiculaire à l'axe d'avancement du châssis et correspondant à la largeur de travail de la machine. Ce décalage permet en outre de dimensionner les plaques de manière telle qu'elles viennent à recouvrement au moins partiel sur une partie de leurs bords verticaux. Ainsi, l'inconvénient qui résultait de la réalisation sous forme d'éléments de plaque, qui engendrait la présence d'un espace vide entre deux éléments de plaque, est alors supprimé grâce à ce chevauchement des éléments de plaque. Il peut également être envisagé de conférer, à chaque élément de plaque, une orientation particulière. Généralement, ces plaques sont disposées sensiblement parallèles les unes par rapport aux autres. Ces plaques, qui sont réalisées à partir d'un flan ou d'une plaque métallique, peuvent être pliées au voisinage de leur extrémité destinée à être positionnée proche du sol comme l'illustre en particulier la figure 3. Bien évidemment, d'autres formes peuvent leur être conférées, en particulier une forme courbe prenant comme référence la courbure du disque positionné en amont du dispositif déflecteur.

Dans ce mode de réalisation particulier, les moyens de liaison des plaques ou groupe de plaques à la machine de travail du sol peuvent donc être communs à l'ensemble des plaques. Les plaques 5 du dispositif déflecteur peuvent en outre êtres munies sur leur dos d'une descente de semis 10 lorsque la machine de travail du sol, destinée à incorporer un tel dispositif déflecteur, comporte en outre des éléments semeurs.

Le dispositif déflecteur, tel que décrit ci-dessus, présente un certain nombre d'avantages. Il permet, outre la suppression de tout risque de colmatage, la possibilité de s'adapter à n'importe quel type de largeur de machine du fait qu'il est à chaque fois possible de rajouter un élément sous forme de plaque sur le châssis de la machine dans le cas d'une conception conforme à celle représentée aux figures 1 à 3.

Pour accentuer l'effet de la mise en vibration des éléments sous forme de plaque ou de lame souhaitée, il peut être prévu, dans la zone de liaison de l'élément sous forme de lame ou de plaque au bâti, un élément élastiquement déformable. Toutefois, si les dimensions de la plaque ou lame et l'épaisseur du flan métallique servant à la réalisation de la plaque ou lame sont optimisés, un tel élément élastiquement déformable ne s'avère pas nécessaire et un excellent résultat peut être obtenu au niveau de la mise en vibration des éléments sous forme de plaque ou de lame sans accessoire du type mentionné ci-dessus.

## Revendications

1. Machine de travail du sol, en particulier déchaumeuse de précision, du type comprenant un châssis (1) équipé d'outils aratoires se présentant sous forme d'au moins un, de préférence deux, train(s) successifs de disques (2, 3) non moteurs et au moins un dispositif déflecteur (4) conformé pour casser le flux de terre projeté par les disques (2) de l'un des trains de disques (2, 3) et assurer un nivellement de la terre au sol,
**caractérisée en ce que** le dispositif déflecteur (4) est, dans sa partie travaillante, correspondant à la zone heurtée par un flux de terre, constitué par une pluralité de plaques (5) aptes à vibrer, de préférence élastiquement, notamment sous l'action du flux de terre, pour faciliter un décollement de la terre desdites plaques, ces plaques (5) étant disposées côte à côte dans le sens de la largeur de la machine et dimensionnées pour couvrir au moins 45 %, de préférence au moins 60 %, de la largeur totale de travail de ladite machine,
**en ce que** chaque plaque (5), ou groupe de plaques (5), est munie de ses propres moyens (6', 7' ; 6", 7") de liaison à la machine de travail du sol pour pouvoir être montée sur la machine de travail du sol de manière indépendante des autres plaques (5) ou groupes de plaques (5),
et **en ce que** les moyens (6', 7' ; 6", 7") de liaison de la plaque (5) ou groupe de plaques (5) à la machine de travail du sol s'étendent entre plaque (5) ou groupe de plaques (5) et disque (3) ou organe (9) de liaison du disque (3) au châssis (1).

2. Machine de travail du sol selon la revendication 1,
**caractérisée en ce que** le dispositif déflecteur (4) conformé pour casser le flux de terre projeté par les disques (2) du train dit train avant de disques est couplé de préférence de manière solidaire en déplacement au train dit train arrière de disques (3).

3. Machine de travail du sol selon l'une des revendications précédentes,
**caractérisée en ce que** les plaques (5) sont alignées le long d'une ligne, sensiblement perpendiculaire à l'axe d'avancement du châssis (1), et correspondant à la largeur de travail de la machine.

4. Machine de travail du sol selon l'une des revendications 1 ou 2,
**caractérisée en ce que** les plaques (5) sont positionnées de manière décalée axialement par rapport à l'axe d'avancement du châssis (1).

5. Machine de travail du sol selon l'une des revendications précédentes,
**caractérisée en ce que** les plaques sont munies sur leur dos d'une descente de semis (10).

6. Machine de travail du sol selon, l'une des revendications précédentes,
**caractérisée en ce que** chaque plaque (5) est reliée dans sa partie en prolongement de sa partie travaillante à une base commune auxdites plaques (5), cette base (11) étant elle-même apte à être fixée à la machine, base (11) et partie travaillante des plaques (5) étant formées d'une seule pièce.

7. Machine de travail du sol selon la revendication 6,
**caractérisée en ce que** les plaques (5) avec leur base commune sont obtenues à partir d'un flan de tôle d'allure générale rectangulaire, sectionné sur une partie de sa largeur suivant une pluralité de découpes sensiblement parallèles prenant naissance à partir d'un même bord libre du flan de tôle pour former lesdits éléments sous forme de plaques (5), ce flan étant éventuellement, antérieurement ou postérieurement à sa découpe, conformé pour lui conférer un profil d'allure générale courbe.

## Patentansprüche

1. Bodenbearbeitungsmaschine, insbesondere Präzisionsegge, der Bauart, die ein mit landwirtschaftlichen Geräten, die die Form von mindestens einer, vorzugweise von zwei aufeinanderfolgenden, nicht antreibenden Gruppen von Scheiben (2,3) aufweisen, und mindestens einer Ausstellvorrichtung (4), die ausgebildet ist, um den von den Scheiben (2) einer der Scheibengruppen (2, 3) projizierten Erdestrom zu zerteilen und eine Nivellierung der Erde am Boden sicherzustellen, ausgerüstetes Gestell (1) umfasst,
**dadurch gekennzeichnet, dass** der Arbeitsabschnitt der Ausstellvorrichtung (4), der der Zone entspricht, die mit einem Erdestrom zusammentrifft, aus einer Vielzahl von insbesondere unter der Einwirkung des Erdestroms vorzugsweise elastisch vibrationsfähigen Platten (5) besteht, um ein Lösen der Erde von den Platten zu erleichtern, wobei diese Platten (5) nebeneinander in Richtung der Breite der Maschine angeordnet und dimensioniert sind, um mindestens 45 %, vorzugsweise mindestens 60 %, der gesamten Arbeitsbreite der Maschine zu bedecken,
dass jede Platte (5) oder Gruppe aus Platten (5) mit ihren eigenen Verbindungsmitteln (6, 7; 6', 7'; 6", 7") mit der Bodenbearbeitungsmaschine ausgestattet ist, um an der Bodenbearbeitungsmaschine unabhängig von den anderen Platten (5) oder Gruppen aus Platten (5) montierbar zu sein,
dass sich die Verbindungsmittel (6', 7'; 6", 7") der Platte (5) oder der Gruppe aus Platten (5) mit der Bodenbearbeitungsmaschine zwischen Platte (5) oder Gruppe aus Platten (5) und Scheibe (3) oder Verbindungsorgan (9) der Scheibe (3) am Gestell (1) erstrecken.

2. Bodenbearbeitungsmaschine nach Anspruch 1,
**dadurch gekennzeichnet, dass** die Ausstellvorrichtung (4), die zum Zerteilen des von den Scheiben (2) der Gruppe, die als vordere Scheibengruppe bezeichnet wird, projizierten Erdestroms ausgebildet ist, vorzugsweise an die Gruppe, die als hintere Scheibengruppe (3) bezeichnet wird, gemeinsam verlagerbar gekoppelt ist.

3. Bodenbearbeitungsmaschine nach einem der vorangehenden Ansprüche,
**dadurch gekennzeichnet, dass** die Platten (5) entlang einer zur Vorschubachse des Gestells (1) etwa lotrechten Linie, die der Arbeitsbreite der Maschine entspricht, ausgerichtet sind.

4. Bodenbearbeitungsmaschine nach einem der Ansprüche 1 oder 2,
**dadurch gekennzeichnet, dass** die Platten (5) im Verhältnis zur Vorschubachse des Gestells (1) axial versetzt positioniert sind.

5. Bodenbearbeitungsmaschine nach einem der vorangehenden Ansprüche,
**dadurch gekennzeichnet, dass** die Platten auf ihrem Rücken mit einem Saatrohr (10) ausgestattet sind.

6. Bodenbearbeitungsmaschine nach einem der vorangehenden Ansprüche,
**dadurch gekennzeichnet, dass** jede Platte (5) in ihrem Abschnitt in Verlängerung ihres Arbeitsabschnitts mit einer Basis verbunden ist, die den Platten (5) gemeinsamen ist, wobei diese Basis (11) selbst imstande ist, an der Maschine befestigt zu sein, wobei die Basis (11) und der Arbeitsabschnitt der Platten (5) aus einem selben Teil gebildet sind.

7. Bodenbearbeitungsmaschine nach Anspruch 6,
**dadurch gekennzeichnet, dass** die Platten (5) mit ihrer gemeinsamen Basis aus einem allgemein rechteckigen Blechteil hergestellt sind, das über einen Teil seiner Breite gemäß einer Vielzahl von etwa parallelen Schnitten, die an einem selben freien Rand des Blechteils beginnen, durchtrennt wird, um die Elemente in Form von Platten (5) zu bilden, wobei dieses Teil eventuell vor oder nach seinem Durchtrennen eine Formung erfährt, die ihm ein allgemein gekrümmtes Profil verleiht.

## Claims

1. A machine for working the soil, in particular a precision lawn dethatcher, of the type comprising a chassis (1) equipped with tilling equipment assuming the form of at least one, preferably two, successive series of non-motorized discs (2, 3) and at least one deflector device (4) configured to break the stream of dirt projected by the discs (2) of one of the series of discs (2, 3) and to provide leveling of the soil,
**characterized in that** the working part of the deflector device (4), which corresponds to the area impacted by a stream of dirt, is made up of a plurality of plates (5) capable of vibrating, preferably elastically, in particular under the action of the stream of dirt, to facilitate unsticking of the dirt from said plates, said plates (5) being positioned side by side in the direction of the width of the machine and sized to cover at least 45%, preferably at least 60%, of the total working with of said machine,
**in that** each plate (5), or group of plates (5), is provided with its own means (6', 7'; 6", 7") for connecting to the machine for working the soil so as to be able to be mounted on the machine for working the soil independently of the other plates (5) or groups of plates (5), and **in that** the means (6', 7'; 6", 7") for connecting the plate (5) or group of plates (5) to the machine for working the soil extend between the plate (5) or group of plates (5) and disc (3) or member (9) for connecting the disc (3) to the chassis (1).

2. The machine for working the soil according to claim 1,
**characterized in that** the deflector device (4) configured to break the stream of dirt projected by the discs (2) of the series, called front series of discs, is preferably securely coupled in displacement to the series, called rear series, of discs (3).

3. The machine for working the soil according to one of the preceding claims,
**characterized in that** the plates (5) are aligned in a row, substantially perpendicular to the axis of advancement of the chassis (1), and corresponding to the working width of the machine.

4. The machine for working the soil according to one of claims 1 or 2,
**characterized in that** the plates (5) are positioned axially offset relative to the axis of advancement of the chassis (1).

5. The machine for working the soil according to one of the preceding claims,
**characterized in that** the backs of the plates are provided with a sowing descent (10).

6. The machine for working the soil according to one of the preceding claims,
**characterized in that** each plate (5) is connected, at its part extending its working part, to a base shared by said plates (5), said base (11) in turn being able to be fastened to the machine, the base (11) and the working part of the plates (5) being formed in a single piece.

7. The machine for working the soil according to claim 6,
**characterized in that** the plates (5), with their shared base, are obtained from a generally rectangular metal blank, sectioned over part of its width with a plurality of substantially parallel cutouts arising from the same free edge of the sheet metal blank to form said elements in the form of plates (5), said blank optionally, before or after cutting, being configured to give it a generally curved profile.
